# EUROPEAN PATENT APPLICATION

(11) **EP 4 835 641 A1**
(43) Date of publication of application: **04.11.2026**
(21) Application number: 24911910.8
(22) Date of filing: 04.10.2024
(51) Int. Cl.: G06F 3/16, B60R 11/02, G06F 3/01, G10L 15/00

(54) **SPEECH OPERATION DEVICE, NON-TRANSITORY COMPUTER-READABLE MEDIUM, AND METHOD**

(30) Priority: 28.12.2023 JP 2023223322
(71) Applicant: TOYOTA JIDOSHA KABUSHIKI KAISHA, Toyota-Shi, Aichi-Ken 471-8571 (JP)
(72) Inventor: MAEDA Eiichi, Toyota-shi, Aichi 471-8571 (JP); GOMI Reona, Toyota-shi, Aichi 471-8571 (JP); KUBO Chikage, Toyota-shi, Aichi 471-8571 (JP); NAKANO Keiko, Toyota-shi, Aichi 471-8571 (JP); YAMADA Kaori, Toyota-shi, Aichi 471-8571 (JP); TERADA Masatoshi, Toyota-shi, Aichi 471-8571 (JP)
(74) Representative: D Young & Co LLP
(86) International application number: PCT/JP2024/035694
(87) International publication number: WO 2025/142016

(57) **Abstract**

Technology for operating in-vehicle devices provided in vehicles by voice is improved. In a voice operation apparatus provided in a vehicle, the voice operation apparatus includes a controller that, when an occupant requests an operation of an in-vehicle device by voice, identifies a first seat position of the occupant who has spoken, and when the in-vehicle device that the speaker requests to operate is not provided at a position corresponding to the first seat position, performs an operation of the in-vehicle device associated with a second seat position.

## Description

### CROSS-REFERENCE TO RELATED APPLICATION

This application claims priority to Japanese Patent Application No. 2023-223322, filed on December 28, 2023, the entire contents of which are incorporated herein by reference.

### TECHNICAL FIELD

The present disclosure relates to a voice operation apparatus, a program, and a method.

### BACKGROUND

Conventionally, a variety of technology for operating in-vehicle devices provided in vehicles by voice has been examined.

For example, Patent Literature (PTL) 1 discloses a speech interaction control device that controls operations by voice for multiple operation devices that can operate independently at respective execution locations.

### CITATION LIST

### Patent Literature

PTL 1: WO 2020/240789 A1

### SUMMARY

### (Technical Problem)

PTL 1 discloses technology for operating multiple operation devices that can operate independently at respective execution locations by voice. However, the technology of PTL 1 does not consider how to handle cases in which an in-vehicle device that a speaker requests to operate is not provided at a position corresponding to the speaker's seat position. Thus, there is room for improvement in technology for operating by voice.

The present disclosure aims at improving technology for operating in-vehicle devices provided in vehicles by voice.

### (Solution to Problem)

A voice operation apparatus according to an embodiment of the present disclosure is a voice operation apparatus provided in a vehicle, the voice operation apparatus including a controller configured to:
when an occupant requests an operation of an in-vehicle device by voice, identify a first seat position of the occupant who is a speaker; and
when the in-vehicle device that the speaker requests to operate is not provided at a position corresponding to the first seat position, perform an operation of the in-vehicle device associated with a second seat position.

A program according to an embodiment of the present disclosure is configured to cause a voice operation apparatus provided in a vehicle to execute operations, the operations including:
when an occupant requests an operation of an in-vehicle device by voice, identifying a first seat position of the occupant who is a speaker; and
when the in-vehicle device that the speaker requests to operate is not provided at a position corresponding to the first seat position, performing an operation of the in-vehicle device associated with a second seat position.

A method according to an embodiment of the present disclosure is a method performed by a voice operation apparatus provided in a vehicle, the method including:
when an occupant requests an operation of an in-vehicle device by voice, identifying a first seat position of the occupant who is a speaker; and
when the in-vehicle device that the speaker requests to operate is not provided at a position corresponding to the first seat position, performing an operation of the in-vehicle device associated with a second seat position.

### (Advantageous Effect)

According to the present disclosure, it is possible to improve technology for operating in-vehicle devices provided in vehicles by voice.

### BRIEF DESCRIPTION OF THE DRAWINGS

In the accompanying drawings:
FIG. 1 is a diagram illustrating a configuration of a system including a voice operation apparatus according to Embodiment 1 of the present disclosure;
FIG. 2 is a flowchart illustrating operations of the system according to Embodiment 1 of the present disclosure;
FIG. 3 is a diagram illustrating an arrangement of the system in a vehicle according to Embodiment 1 of the present disclosure;
FIG. 4 is a diagram illustrating a configuration of a system including a voice operation apparatus according to Embodiment 2 of the present disclosure; and
FIG. 5 is a flowchart illustrating operations of the system according to Embodiment 2 of the present disclosure.

### DETAILED DESCRIPTION

Embodiments of the present disclosure will be described below with reference to the drawings.

### (Embodiment 1)

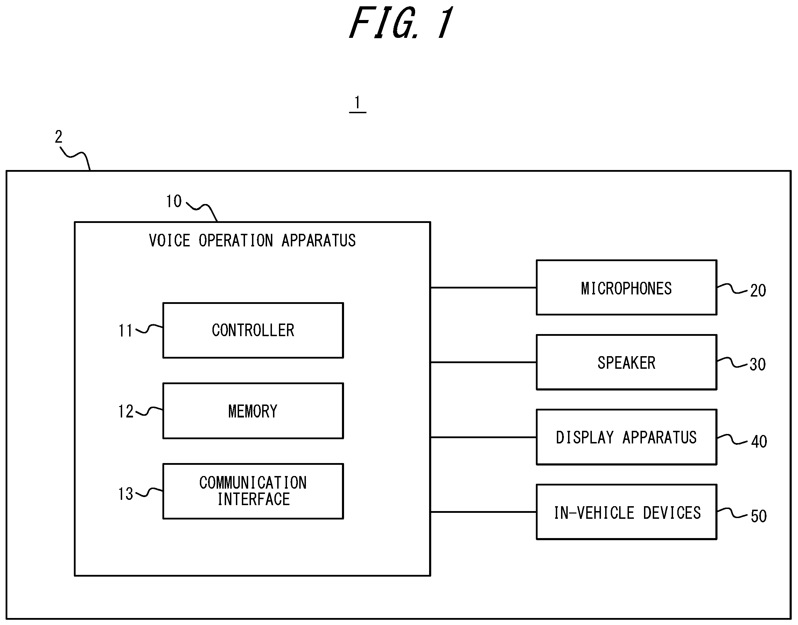

With reference to FIG. 1, an outline of a system 1 including a voice operation apparatus according to an embodiment of the present disclosure will be described. The system 1 is provided in a vehicle 2. The system 1 includes a voice operation apparatus 10, multiple microphones 20, a speaker 30, a display apparatus 40, and in-vehicle devices 50.

The vehicle 2 is an automobile, for example, but is not limited thereto and may be any appropriate vehicle. The vehicle 2 is, for example, a gasoline vehicle, an electric vehicle (EV), a hybrid vehicle (HV), a plug-in hybrid vehicle (PHV), a fuel cell vehicle (FCV), or the like, but is not limited thereto. The vehicle 2 may be a manned vehicle or any autonomous vehicle that travels unmanned.

An outline of the present embodiment will be first described, and details thereof will be described later. When an occupant requests an operation of an in-vehicle device by voice, the voice operation apparatus 10 provided in the vehicle 2 identifies the seat position (hereinafter also referred to as first seat position) of the occupant who has spoken. When the in-vehicle device that the occupant requests to operate is not provided at a position corresponding to the first seat position, the voice operation apparatus 10 performs an operation of the in-vehicle device associated with a seat position (hereinafter also referred to as second seat position) different from the first seat position.

Thus, according to the present embodiment, when an in-vehicle device that a speaker requests to operate is not provided at a position corresponding to a first seat position, which is the seat position of the occupant who has spoken, the voice operation apparatus 10 performs an operation of the in-vehicle device associated with a second seat position. Therefore, voice operation technology is improved in that, even when an in-vehicle device that an occupant requests to operate is not provided at a position corresponding to the seat position of the occupant, an operation of the in-vehicle device at another second seat position can be performed.

Next, configurations of the system 1 will be described in detail.

As illustrated in FIG. 1, the voice operation apparatus 10 includes a controller 11, a memory 12, and a communication interface 13.

The controller 11 includes one or more processors, one or more programmable circuits, one or more dedicated circuits, or a combination of these. The processors are, for example, general purpose processors such as central processing units (CPUs) or graphics processing units (GPUs), or dedicated processors that are dedicated to specific processing, but are not limited to these. The programmable circuits are field-programmable gate arrays (FPGAs), for example, but are not limited to this. The dedicated circuits are, for example, application specific integrated circuits (ASICs), but are not limited to this. The controller 11 controls operations of the entire voice operation apparatus 10.

The memory 12 includes at least one semiconductor memory, at least one magnetic memory, at least one optical memory, or a combination of at least two of these. The semiconductor memory is, for example, random access memory (RAM) or read only memory (ROM). The RAM is, for example, static random access memory (SRAM) or dynamic random access memory (DRAM). The ROM is, for example, electrically erasable programmable read only memory (EEPROM). The memory 12 functions as, for example, a main memory, an auxiliary memory, or a cache memory. The memory 12 stores data to be used for operations of the voice operation apparatus 10 and data obtained by operations of the voice operation apparatus 10. For example, the memory 12 stores a program (hereinafter referred to as voice assistant) related to voice processing, data, and the like. The voice assistant is a program that is activated by a predetermined voice command (hereinafter referred to as a wake word). The voice assistant performs voice recognition of spoken content issued after the activation, and estimates the user's intent. The voice assistant performs predetermined processing based on the estimated intent.

The communication interface 13 includes at least one interface for external communication. The interface for external communication may be either a wired or wireless communication interface. For wired communication, the interface for communication may be, for example, a local area network (LAN) interface, an interface compliant with a communication standard such as Universal Serial Bus (USB) or High-Definition Multimedia Interface (HDMI^{®}) (HDMI is a registered trademark in Japan, other countries, or both). For wireless communication, the interface for communication may be, for example, an interface compliant with a mobile communication standard such as Long Term Evolution (LTE), the 4th generation (4G) standard, or the 5th generation (5G) standard, or an interface compliant with a short-range wireless communication standard such as Bluetooth^{®} (Bluetooth is a registered trademark in Japan, other countries, or both). The communication interface 13 receives data to be used for operations of the voice operation apparatus 10, and transmits data obtained by operations of the voice operation apparatus 10.

The functions of the voice operation apparatus 10 are realized by executing a program according to the present embodiment by a processor corresponding to the voice operation apparatus 10. That is, the functions of the voice operation apparatus 10 are realized by software. The program causes a computer to execute operations of the voice operation apparatus 10, thereby causing the computer to function as the voice operation apparatus 10. That is, the computer executes the operations of the voice operation apparatus 10 in accordance with the program to thereby function as the voice operation apparatus 10.

In the present embodiment, the program can be recorded on a computer readable recording medium. The computer readable recording medium includes a non-transitory computer readable medium and is, for example, a magnetic recording apparatus, an optical disc, a magneto-optical recording medium, or a semiconductor memory. The program is distributed, for example, by selling, transferring, or lending a portable recording medium such as a digital versatile disc (DVD) or a compact disc read only memory (CD-ROM) on which the program is recorded. The program may also be distributed by storing the program in a storage of an external server and transmitting the program from the external server to another computer. The program may be provided as a program product.

Some or all of the functions of the voice operation apparatus 10 may be realized by a dedicated circuit corresponding to the controller 11. That is, some or all of the functions of the voice operation apparatus 10 may be realized by hardware.

The system 1 also includes multiple microphones 20. The microphones 20 are provided at respective seats within the vehicle 2, for example. The microphones 20 accept voice inputs from occupants of the respective seats. The microphones 20 transmit the accepted voice inputs to the voice operation apparatus 10 via the communication interface 13.

The system 1 also includes the speaker 30. The speaker 30 outputs information as audio. The number of speakers 30 may be one or may be multiple. When there are multiple speakers 30, the speakers 30 may be provided at the respective seats within the vehicle 2, for example.

The system 1 also includes the display apparatus 40. The display apparatus 40 includes at least one interface for output. The interface for output is, for example, a display that outputs information as video, or the like. The display is, for example, a liquid crystal display (LCD) or an organic electro luminescent (EL) display. The display apparatus 40 displays and outputs data obtained by operations of the voice operation apparatus 10. The display apparatus 40 may include a touch screen. In this case, the display apparatus 40 accepts operations for inputting data to be used for operations of the voice operation apparatus 10, and displays and outputs data obtained by operations of the voice operation apparatus 10. In the present embodiment, the display apparatus 40 is described as including a touch screen. For example, the display apparatus 40 may be provided in the center console.

The system 1 also includes the in-vehicle devices 50. The in-vehicle devices 50 include air conditioners, power windows, a sunroof, a speaker, and/or interior lights. The in-vehicle devices 50 are controlled by control instructions from the voice assistant of the voice operation apparatus 10.

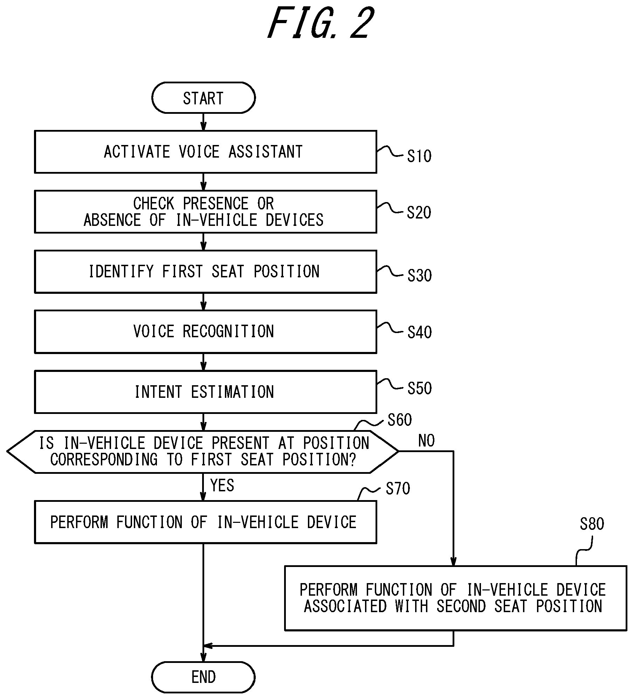

With reference to FIG. 2, operations of the system 1 according to Embodiment 1 will be described.

Step S10: The controller 11 of the voice operation apparatus 10 activates the voice assistant by receiving the utterance of a wake word from an occupant via a microphone 20. The activation of the voice assistant is not limited thereto, and the voice assistant may be activated by detecting a push of a physical button by an occupant. Such physical buttons may be provided at some or all of the seats. For example, the physical button may be a steering switch provided on the steering wheel. After being activated, the voice assistant can accept a request for an operation of an in-vehicle device 50 by voice from the occupant.

Step S20: The controller 11 checks the presence or absence of the in-vehicle devices 50. Specifically, the controller 11 checks the presence or absence of the in-vehicle devices 50 that are equipped in the vehicle 2 and are controllable by the voice assistant. This allows the in-vehicle devices 50 that are controllable after the activation of the voice assistant to be grasped.

Step S30: When the occupant requests an operation of an in-vehicle device 50 by voice, the controller 11 identifies the first seat position of that occupant. In other words, when the occupant requests an operation of an in-vehicle device by voice, the first seat position is identified. Any method can be adopted for identification processing of the first seat position. For example, the controller 11 identifies the first seat position of the occupant based on the volume or the like of voice input to the microphones 20.

Step S40: The controller 11 performs voice recognition processing to recognize the spoken content from the occupant. The algorithm related to the voice recognition processing may include a deep neural network or the like.

Step S50: The controller 11 performs intent estimation processing based on the voice recognition result. The algorithm related to the intent estimation processing may include a deep neural network or the like. For example, the controller 11 estimates the in-vehicle device 50 to be operated and the specific content of the operation. For example, when the spoken content from the occupant based on the voice recognition result is to lower the cabin temperature, the controller 11 estimates that the intent of the spoken content is to lower the air conditioner's temperature to a specified level.

Step S60: The controller 11 determines whether the in-vehicle device 50 is present at a position corresponding to the first seat position. Since information regarding the in-vehicle devices 50 that are controllable after the activation of the voice assistant is grasped in step S20, the controller 11 can determine, based on the information, the presence or absence of the in-vehicle device 50 at the position corresponding to the first seat position. The position corresponding to the first seat position refers to a position close to the first seat position. When the in-vehicle device 50 is determined to be present at the position corresponding to the first seat position, the process proceeds to step S70. On the other hand, when the in-vehicle device 50 is determined to be absent from the position corresponding to the first seat position, the process proceeds to step S80.

Step S70: when the in-vehicle device 50 is determined to be present at the position corresponding to the first seat position, the controller 11 performs the function of the in-vehicle device 50. For example, when the intent of the spoken content is to lower the air conditioner's temperature to a specified level, the controller 11 performs the processing of lowering the setting temperature of the air conditioner provided at the position corresponding to the first seat position.

Step S80: when the in-vehicle device 50 is determined to be absent from the position corresponding to the first seat position, the controller 11 performs the function of the in-vehicle device 50 associated with a second seat position. The in-vehicle device 50 associated with the second seat position refers to an in-vehicle device 50 provided at a position corresponding to the second seat position. For example, when the intent of the spoken content is to lower the air conditioner's temperature to a specified level, the controller 11 performs processing of lowering the setting temperature of an air conditioner associated with the second seat position. Here, the correspondence between the first seat position and the second seat position may be predetermined.

For example, the second seat position described above may be a seat position closest to the first seat position. This allows the in-vehicle device 50 at a seat position closest to the first seat position to be operated, and increases the possibility of satisfying the occupant's request due to the function of the in-vehicle device 50.

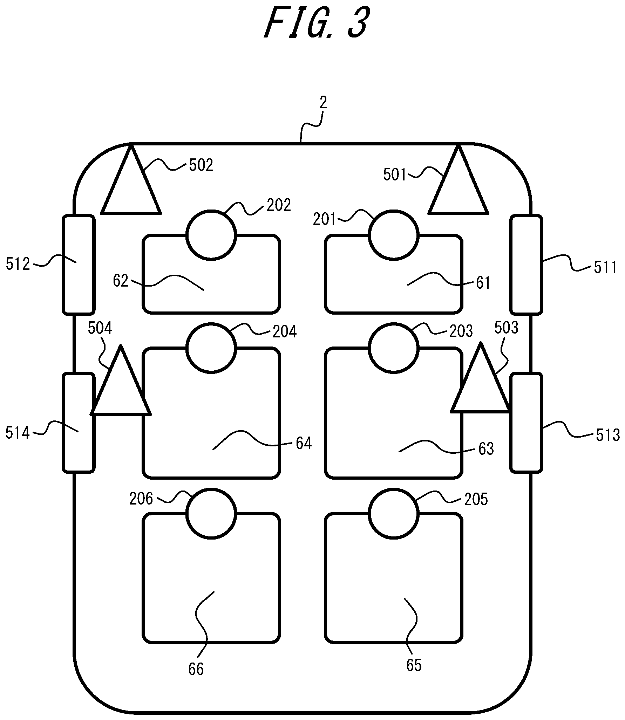

The first seat position may refer to a position related to a third-row seat. In this case, the second seat position may refer to a position related to a second-row seat. FIG. 3 illustrates an example of the positional relationship between the respective seats and the in-vehicle devices 50 and the like. Described herein is an example in which the in-vehicle devices 50 include air conditioners 501 to 504 and power windows 511 to 514.

The vehicle 2 illustrated in FIG. 3 has three rows of seats and includes seats 61 to 66. The seat 61 is a driver's seat (D seat). The seat 62 is a passenger seat (P seat). The seat 63 is a second-row right-side seat (2RR seat). The seat 64 is a second-row left-side seat (2RL seat). The seat 65 is a third-row right-side seat (3RR seat). The seat 66 is a third-row left-side seat (3RL seat). Microphones 201 to 206 are installed in the vicinity of the front of each of the seats 61 to 66, to detect voice of an occupant of each seat.

Here, the air conditioner 501 and the power window 511 are provided at positions corresponding to the seat position of the seat 61. In other words, the air conditioner 501 and the power window 511 are associated with the seat 61. The air conditioner 502 and the power window 512 are provided at positions corresponding to the seat position of the seat 62. In other words, the air conditioner 502 and the power window 512 are associated with the seat 62. The air conditioner 503 and the power window 513 are provided at positions corresponding to the seat position of the seat 63. In other words, the air conditioner 503 and the power window 513 are associated with the seat 63. The air conditioner 504 and the power window 514 are provided at positions corresponding to the seat position of the seat 64. In other words, the air conditioner 504 and the power window 514 are associated with the seat 64. On the other hand, neither an air conditioner nor a power window is provided at a position corresponding to the seat position of the seat 65. Similarly, neither an air conditioner nor a power window is provided at a position corresponding to the seat position of the seat 66.

For example, when an occupant of the seat 65, which is a third-row seat, requests an operation of an air conditioner or a power window by voice, the in-vehicle device that the speaker requests to operate is not provided at a position corresponding to the seat 65. Therefore, the controller 11 performs an operation of the air conditioner 503 or the power window 513 associated with the seat 63, which is a second-row seat. Here, the seat 63, which is closest to the seat 65 corresponding to the first seat position, corresponds to the second seat position.

For example, when an occupant of the seat 66, which is a third-row seat, requests an operation of an air conditioner or a power window by voice, the in-vehicle device that the speaker requests to operate is not provided at a position corresponding to the seat 66. Therefore, the controller 11 performs an operation of the air conditioner 504 or the power window 514 associated with the seat 64, which is a second-row seat. Here, the seat 64, which is closest to the seat 66 corresponding to the first seat position, corresponds to the second seat position.

Thus, according to the present embodiment, when an in-vehicle device that a speaker requests to operate is not provided at a position corresponding to a first seat position, which is the seat position of the occupant who has spoken, the voice operation apparatus 10 performs an operation of the in-vehicle device associated with a second seat position. Therefore, voice operation technology is improved in that, even when an in-vehicle device that an occupant requests to operate is not provided at a position corresponding to the seat position of the occupant, an operation of the in-vehicle device at another second seat position can be performed.

### (Embodiment 2)

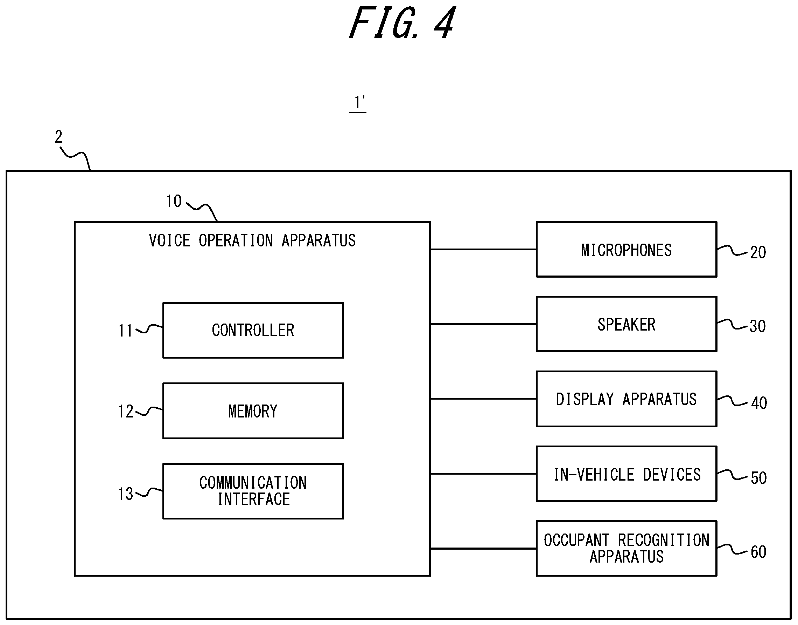

A system 1' according to Embodiment 2 of the present disclosure will be hereinafter described. FIG. 4 is a block diagram illustrating a configuration of the system 1' according to Embodiment 2 of the present disclosure. The same reference numerals are assigned to the same components as in Embodiment 1, and an explanation is omitted. The system 1' according to Embodiment 2 differs from the configuration of Embodiment 1 in that the system 1' includes an occupant recognition apparatus 60. The occupant recognition apparatus 60 is an apparatus that determines whether an occupant is present at each seat. The occupant recognition apparatus 60 may include, for example, weight sensors, sensors provided in seat belt buckles, or the like, and detects, based on the detection results of these sensors, whether an occupant is present at each seat. The occupant recognition apparatus 60 transmits the detection results to the voice operation apparatus 10. In summary, the voice operation apparatus 10 of the system 1' adjusts, based on the presence or absence of an occupant at a second seat position, whether an operation of an in-vehicle device associated with the second seat position should be performed.

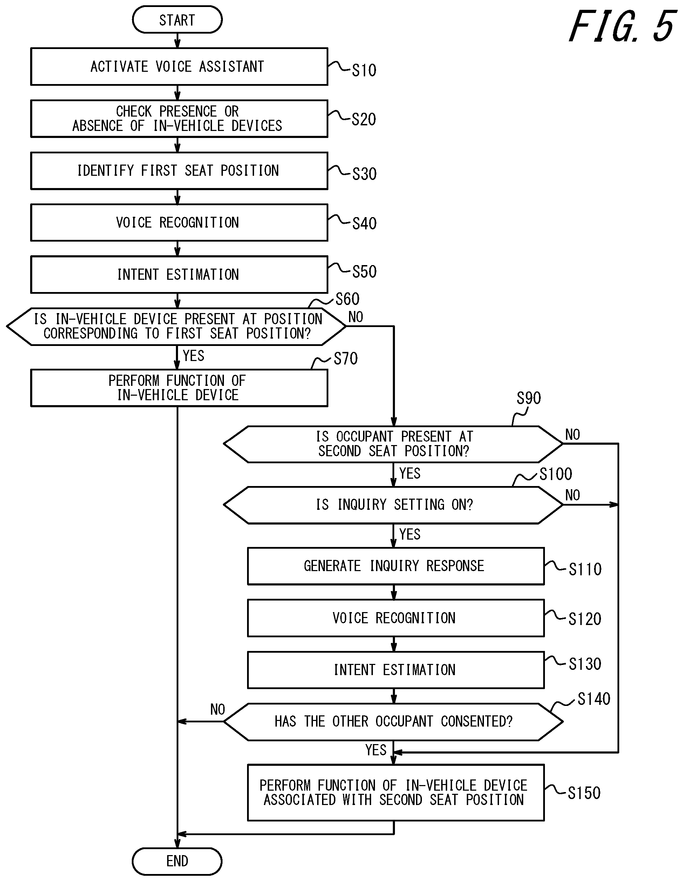

Operations of the system 1' according to Embodiment 2 will be described with reference to FIG. 5. The same operations (steps S10 to S70) as the system 1 according to Embodiment 1 are denoted by the same reference numerals, and an explanation is omitted.

Step S90: When the in-vehicle device 50 is determined to be absent from a position corresponding to the first seat position in step S60, the controller 11 determines whether an occupant (hereinafter referred to as another occupant) is present at the second seat position. The controller 11 receives the detection result from the occupant recognition apparatus 60, and performs determination processing based on the detection result. When another occupant is determined to be present, the process proceeds to step S100. When another occupant is determined to be absent from the second seat position, the process proceeds to step S150.

Step S100: The controller 11 determines whether inquiry setting is ON or OFF. The inquiry setting is a setting item that indicates whether to ask the occupant of the second seat position whether an operation of the in-vehicle device associated with the second seat position is acceptable. When the inquiry setting is ON, an inquiry as to whether an operation of the in-vehicle device associated with the second seat position is acceptable is made to the occupant of the second seat position. On the other hand, when the inquiry setting is OFF, an inquiry as to whether an operation of the in-vehicle device associated with the second seat position is acceptable is made to the occupant of the second seat position. The inquiry setting may be set to, for example, ON by default, or may be set to OFF by default. The occupant can change the inquiry setting, for example, by an input operation to the display apparatus 40. When the inquiry setting is ON, the process proceeds to S110. On the other hand, when the inquiry setting is not ON, the process proceeds to S150.

Step S110: The controller 11 generates an inquiry response and outputs the generated inquiry response through the speaker 30. The inquiry response is generated based on the intent estimation processing result of step S50. For example, when the intent of the spoken content is to lower the air conditioner's temperature to a specified level, the content of the inquiry response may be, for example, "Is it okay to lower the air conditioner's temperature?"

Step S120: The controller 11 performs voice recognition processing and recognizes spoken content from the other occupant.

Step S130: The controller 11 performs intent estimation processing for the other occupant based on the voice recognition result. Specifically, the controller 11 estimates whether the other occupant has consented to the operation of the in-vehicle device 50.

Step S140: The controller 11 determines, based on the estimation result of step S130, whether the other occupant has consented. When the other occupant is determined to have consented, the process proceeds to step S150. On the other hand, when the other occupant is determined to have not consented, the process ends.

Step S150: When no other occupant is determined to be present at the second seat position in step S90, when the inquiry setting is not ON (when the inquiry setting is OFF) in step S100, or when the other occupant is determined to have consented in step S140, the controller 11 perform the function of the in-vehicle device 50 associated with the second seat position.

Thus, according to the present embodiment, when an in-vehicle device that an speaker requests to operate is not provided at a position corresponding to a first seat position, which is the seat position of the occupant who has spoken, the voice operation apparatus 10 performs, based on the consent of another occupant sitting in a second seat position, an operation of the in-vehicle device associated with the second seat position. Therefore, voice operation technology is improved in that, even when an in-vehicle device that an occupant requests to operate is not provided at a position corresponding to the seat position of the occupant, an operation of the in-vehicle device at another second seat position can be performed. The voice operation technology is also improved in that obtaining the consent of another occupant can enhance the sense of agreement of the other occupant.

According to Embodiment 2, the controller 11 confirms the consent of another occupant based on the inquiry setting. Therefore, it is possible to switch whether to inquire for consent according to the situation, thereby improving the convenience for occupants. When it is likely that the consent of another occupant is not particularly necessary, for example, when only family members are on board the vehicle 2, the inquiry setting may be OFF so that the voice operation apparatus 10 can be adaptively controlled according to the situation.

In the above, the controller 11 performs the determination processing related to the inquiry setting in step S100, but such determination processing may be omitted. For example, when an occupant is determined to be present at the second seat position in step S90, the process may proceed to step S110. In other words, when an occupant is determined to be present at the second seat position, the controller 11 may ask the occupant whether an operation of the in-vehicle device 50 is acceptable.

While the present disclosure has been described with reference to the drawings and examples, it should be noted that various modifications and revisions may be implemented by those skilled in the art based on the present disclosure. Accordingly, such modifications and revisions are included within the scope of the present disclosure. For example, functions or the like contained in each component, each step, or the like can be rearranged without logical inconsistency, and a plurality of components, steps, or the like can be combined into one or divided.

In each embodiment described above, for example, an embodiment in which the configuration and operations of the voice operation apparatus 10 are distributed among multiple computers capable of communicating with each other can also be implemented. For example, an embodiment in which some or all of the components of the voice operation apparatus 10 are provided in a device mounted in the vehicle 2 can also be implemented. For example, a navigation apparatus mounted in the vehicle 2 may be provided with some or all of the components of the voice operation apparatus 10.

For example, an embodiment in which a general purpose computer functions as the voice operation apparatus 10 according to each embodiment described above can also be implemented. Specifically, a program in which processes for realizing the functions of the voice operation apparatus 10 according to each embodiment described above are written may be stored in a memory of a general purpose computer, and the program may be read and executed by a processor. Accordingly, the present disclosure according to the present embodiments can also be implemented as programs executable by a processor, or a non-transitory computer readable medium storing the programs.

For example, a configuration that causes a general purpose electronic device such as a smartphone or a computer to function as the voice operation apparatus 10 according to each embodiment described above can also be implemented. Specifically, a program in which processes for realizing the functions of the voice operation apparatus 10 and the like according to each embodiment are written may be stored in a memory of the electronic device, and the program may be read and executed by a processor of the electronic device. Accordingly, the disclosure according to an embodiment can also be implemented as a program executable by a processor.

Examples of some embodiments of the present disclosure are described below. However, it should be noted that the embodiments of the present disclosure are not limited to these examples.
[Appendix 1] A voice operation apparatus provided in a vehicle, the voice operation apparatus comprising a controller configured to:
   when an occupant requests an operation of an in-vehicle device by voice, identify a first seat position of the occupant who is a speaker; and
   when the in-vehicle device that the speaker requests to operate is not provided at a position corresponding to the first seat position, perform an operation of the in-vehicle device associated with a second seat position.
[Appendix 2] The voice operation apparatus according to appendix 1, wherein the second seat position is a seat position closest to the first seat position.
[Appendix 3] The voice operation apparatus according to appendix 1 or 2, wherein
   the first seat position is a position corresponding to a third-row seat, and
   the second seat position is a position corresponding to a second-row seat.
[Appendix 4] The voice operation apparatus according to any one of appendices 1 to 3, wherein when another occupant is present at the second seat position, the controller is configured to ask the other occupant whether the operation of the in-vehicle device is acceptable.
[Appendix 5] The voice operation apparatus according to any one of appendices 1 to 4, wherein when another occupant is present at the second seat position and an inquiry setting is ON, the controller is configured to ask the other occupant whether the operation of the in-vehicle device is acceptable.
[Appendix 6] The voice operation apparatus according to appendix 5, wherein when the inquiry setting is OFF, the controller is configured not to ask the other occupant whether the operation of the in-vehicle device is acceptable.
[Appendix 7] The voice operation apparatus according to any one of appendices 1 to 6, wherein the in-vehicle device includes an air conditioner, a power window, a sunroof, a speaker, and/or an interior light.
[Appendix 8] A program configured to cause a voice operation apparatus provided in a vehicle to execute operations, the operations comprising:
   when an occupant requests an operation of an in-vehicle device by voice, identifying a first seat position of the occupant who is a speaker; and
   when the in-vehicle device that the speaker requests to operate is not provided at a position corresponding to the first seat position, performing an operation of the in-vehicle device associated with a second seat position.
[Appendix 9] The program according to appendix 8, wherein the second seat position is a seat position closest to the first seat position.
[Appendix 10] The program according to appendix 8 or 9, wherein
   the first seat position is a position corresponding to a third-row seat, and
   the second seat position is a position corresponding to a second-row seat.
[Appendix 11] The program according to any one of appendices 8 to 10, wherein the operations comprise, when another occupant is present at the second seat position, asking the other occupant whether the operation of the in-vehicle device is acceptable.
[Appendix 12] The program according to any one of appendices 8 to 11, wherein the operations comprise, when another occupant is present at the second seat position and an inquiry setting is ON, asking the other occupant whether the operation of the in-vehicle device is acceptable.
[Appendix 13] The program according to appendix 12, wherein when the inquiry setting is OFF, the controller is configured not to ask the other occupant whether the operation of the in-vehicle device is acceptable.
[Appendix 14] The program according to any one of appendices 8 to 13, wherein the in-vehicle device includes an air conditioner, a power window, a sunroof, a speaker, and/or an interior light.
[Appendix 15] A method performed by a voice operation apparatus provided in a vehicle, the method comprising:
   when an occupant requests an operation of an in-vehicle device by voice, identifying a first seat position of the occupant who is a speaker; and
   when the in-vehicle device that the speaker requests to operate is not provided at a position corresponding to the first seat position, performing an operation of the in-vehicle device associated with a second seat position.
[Appendix 16] The method according to appendix 15, wherein the second seat position is a seat position closest to the first seat position.
[Appendix 17] The program according to appendix 15 or 16, wherein
   the first seat position is a position corresponding to a third-row seat, and
   the second seat position is a position corresponding to a second-row seat.
[Appendix 18] The program according to any one of appendices 15 to 17, comprising, when another occupant is present at the second seat position, asking the other occupant whether the operation of the in-vehicle device is acceptable.
[Appendix 19] The program according to any one of appendices 15 to 18, comprising, when another occupant is present at the second seat position and an inquiry setting is ON, asking the other occupant whether the operation of the in-vehicle device is acceptable.
[Appendix 20] The program according to appendix 19, wherein when the inquiry setting is OFF, the controller is configured not to ask the other occupant whether the operation of the in-vehicle device is acceptable.

### REFERENCE SIGNS LIST

- 1: system
- 2: vehicle
- 10: voice operation apparatus
- 11: controller
- 12: memory
- 13: communication interface
- 20: multiple microphones
- 30: speaker
- 40: display apparatus
- 50: in-vehicle devices
- 60: occupant recognition apparatus
- 61-66: seats
- 201-206: microphones
- 501-504: air conditioners
- 511-514: power windows

## Claims

1. A voice operation apparatus provided in a vehicle, the voice operation apparatus comprising a controller configured to:
when an occupant requests an operation of an in-vehicle device by voice, identify a first seat position of the occupant who is a speaker; and
when the in-vehicle device that the speaker requests to operate is not provided at a position corresponding to the first seat position, perform an operation of the in-vehicle device associated with a second seat position.

2. The voice operation apparatus according to claim 1, wherein the second seat position is a seat position closest to the first seat position.

3. The voice operation apparatus according to claim 1, wherein
the first seat position is a position corresponding to a third-row seat, and
the second seat position is a position corresponding to a second-row seat.

4. The voice operation apparatus according to claim 1, wherein when another occupant is present at the second seat position, the controller is configured to ask the other occupant whether the operation of the in-vehicle device is acceptable.

5. The voice operation apparatus according to claim 1, wherein when another occupant is present at the second seat position and an inquiry setting is ON, the controller is configured to ask the other occupant whether the operation of the in-vehicle device is acceptable.

6. The voice operation apparatus according to claim 5, wherein when the inquiry setting is OFF, the controller is configured not to ask the other occupant whether the operation of the in-vehicle device is acceptable.

7. The voice operation apparatus according to any one of claims 1 to 6, wherein the in-vehicle device includes an air conditioner, a power window, a sunroof, a speaker, and/or an interior light.

8. A non-transitory computer readable medium storing a program configured to cause a voice operation apparatus provided in a vehicle to execute operations, the operations comprising:
when an occupant requests an operation of an in-vehicle device by voice, identifying a first seat position of the occupant who is a speaker; and
when the in-vehicle device that the speaker requests to operate is not provided at a position corresponding to the first seat position, performing an operation of the in-vehicle device associated with a second seat position.

9. The non-transitory computer readable medium according to claim 8, wherein the second seat position is a seat position closest to the first seat position.

10. The non-transitory computer readable medium according to claim 8, wherein
the first seat position is a position corresponding to a third-row seat, and
the second seat position is a position corresponding to a second-row seat.

11. The non-transitory computer readable medium according to claim 8, wherein the operations comprise, when another occupant is present at the second seat position, asking the other occupant whether the operation of the in-vehicle device is acceptable.

12. The non-transitory computer readable medium according to claim 8, wherein the operations comprise, when another occupant is present at the second seat position and an inquiry setting is ON, asking the other occupant whether the operation of the in-vehicle device is acceptable.

13. The non-transitory computer readable medium according to claim 12, wherein the operations comprise, when the inquiry setting is OFF, not asking the other occupant whether the operation of the in-vehicle device is acceptable.

14. The non-transitory computer readable medium according to any one of claims 8 to 13, wherein the in-vehicle device includes an air conditioner, a power window, a sunroof, a speaker, and/or an interior light.

15. A method performed by a voice operation apparatus provided in a vehicle, the method comprising:
when an occupant requests an operation of an in-vehicle device by voice, identifying a first seat position of the occupant who is a speaker; and
when the in-vehicle device that the speaker requests to operate is not provided at a position corresponding to the first seat position, performing an operation of the in-vehicle device associated with a second seat position.

16. The method according to claim 15, wherein the second seat position is a seat position closest to the first seat position.

17. The method according to claim 15, wherein
the first seat position is a position corresponding to a third-row seat, and
the second seat position is a position corresponding to a second-row seat.

18. The method according to claim 15, comprising, when another occupant is present at the second seat position, asking the other occupant whether the operation of the in-vehicle device is acceptable.

19. The method according to claim 15, comprising, when another occupant is present at the second seat position and an inquiry setting is ON, asking the other occupant whether the operation of the in-vehicle device is acceptable.

20. The method according to claim 19, comprising, when the inquiry setting is OFF, not asking the other occupant whether the operation of the in-vehicle device is acceptable.
